# EUROPEAN PATENT APPLICATION

(11) **EP 2 130 752 A1**
(43) Date of publication of application: **09.12.2009**
(21) Application number: 08722738.5
(22) Date of filing: 24.03.2008
(51) Int. Cl.: B62J 9/00, B62J 1/12, B62J 35/00, B62K 11/00, B62K 11/04, B62M 7/02

(54) **STRADDLE RIDING TYPE VEHICLE**

(30) Priority: 30.03.2007 JP 2007094983
(71) Applicant: Yamaha Hatsudoki Kabushiki Kaisha, Iwata-shi, Shizuoka 438-8501 (JP)
(72) Inventor: OHIRA, Masaru, c/o Yamaha Hatsudoki K.K., Shizuoka-ken 438-8501 (JP)
(74) Representative: Grünecker, Kinkeldey, Stockmair & Schwanhäusser Anwaltssozietät
(86) International application number: PCT/JP2008/055472
(87) International publication number: WO 2008/123205

(57) **Abstract**

A motorcycle 110 includes: an engine unit 140 which generates driving force to be transmitted to a rear wheel 190 and is attached to a body frame 130; a fuel tank 160 which stores fuel to be supplied to the engine unit 140; a helmet storage unit 181 which accommodates a helmet; and a step 170 on which a foot of a rider is placed. The fuel tank 160 is disposed before the engine unit 140. At least a part of the helmet storage unit 181 is disposed above the fuel tank 160. The helmet storage unit 181 is disposed before the step 170.

## Description

### TECHNICAL FIELD

The present invention relates to a straddle-type vehicle including an engine attached to a body frame, a fuel tank for storing fuel to be supplied to the engine, and an article storage unit for accommodating an article such as a helmet.

### BACKGROUND ART

For a straddle-type vehicle which requires a rider to take a posture of straddling on a saddle such as a motorcycle, various layouts which aim at efficient disposition of included components have been proposed. According to a layout example of related-art straddle-type vehicle, a helmet storage unit for accommodating a helmet is disposed before a seat on which riders (rider and tandem-rider) sit, and a fuel tank for storing fuel to be supplied to an engine is disposed below the seat (for example, see Patent Reference 1).
Patent Reference 1: Japanese Patent No. 2,868,787 (pp. 3-4, Fig. 1)

### DISCLOSURE OF THE INVENTION

According to the related-art straddle-type vehicle discussed above, the article storage unit such as helmet storage unit is disposed before the seat on which the riders sit. Thus, the legs (particularly knees) of the riders sitting on the seat easily contact the wide article storage unit. For the related-art straddle-type vehicle of this type, therefore, improvement over its maneuverability and comfortableness around the knees of the riders riding on the motorcycle has been demanded. Particularly for the straddle-type vehicle whose width is decreased, the maneuverability of the vehicle and the comfortableness around the riders' knees are considerably affected by the layout of the article storage unit and the fuel tank which occupy a certain space.

The invention has been developed to solve these problems. It is an object of the invention to provide a straddle-type vehicle including an article storage unit such as a helmet storage unit and a fuel tank and capable of achieving further improvement over its maneuverability and comfortableness around the knees of a rider.

In order to achieve this object, a straddle-type vehicle provided according to the invention has the following characteristics. A straddle-type vehicle (for example, motorcycle 110) according to a first aspect of the invention includes: an engine (engine unit 140) which generates driving force to be transmitted to a wheel (rear wheel 190) and is attached to a body frame (body frame); a fuel tank (fuel tank 160) which stores fuel to be supplied to the engine; an article storage unit (helmet storage unit 181) which accommodates an article; and a foot rest (step 170) on which a foot of a rider is placed. The fuel tank is disposed before the engine. At least a part of the article storage unit is disposed above the fuel tank. The article storage unit is disposed before the foot rest.

According to the straddle-type vehicle having this structure, the engine and the fuel tank are disposed in the lower region of the vehicle, and at least a part of the article storage unit is disposed above the fuel tank. Thus, the engine and the fuel tank are positioned below the legs (particularly knees) of the rider sitting on a seat. Also, the article storage unit is positioned before the foot rest.

In this case, the legs (particularly knees) of the rider sitting on the seat do not easily contact the article storage unit and the fuel tank.

According to this motorcycle, therefore, the maneuverability of the straddle-type vehicle and the comfortableness around the knees of the rider riding on the vehicle can be improved even in the structure having the article storage unit and the fuel tank.

According to a straddle-type vehicle in a second aspect of the invention, the fuel tank has an oil supply port unit (oil supply port unit 161) through which the fuel is supplied, and the oil supply port unit is disposed behind the article storage unit in the structure of the first aspect of the invention.

According to a straddle-type vehicle in a third aspect of the invention, the fuel tank has an oil supply port unit (oil supply port unit 161V) through which the fuel is supplied, and the oil supply port unit is disposed before the article storage unit in the structure of the first aspect of the invention.

According to a straddle-type vehicle in a fourth aspect of the invention, the fuel tank has a fuel pipe unit (fuel hose 163V) connected to the oil supply port unit and the fuel tank, and the fuel pipe unit is disposed along an outer side surface (outer side surface 181a) of the article storage unit in the structure of the third aspect of the invention.

According to a straddle-type vehicle in a fifth aspect of the invention, a body frame (body frame 130) which constitutes a framework of the straddle-type vehicle is provided, and the body frame is disposed above the article storage unit in the structure of the first aspect of the invention.

According to a straddle-type vehicle in a sixth aspect of the invention, a vertical sub frame (vertical sub frame 132) connected with the body frame and extending substantially in the up-down direction of the straddle-type vehicle, and a tank bracket (tank bracket 165) which supports the fuel tank are provided, and the tank bracket is attached to the vertical sub frame in the structure of the fifth aspect of the invention.

According to a straddle-type vehicle in a seventh aspect of the invention, the article storage unit has an opening (opening 181b), the article storage unit has a cover (cover 183) which closes the opening, and the cover is disposed on the side surface of the article storage unit in the structure of the sixth aspect of the invention.

According to a straddle-type vehicle in an eighth aspect of the invention, the article storage unit has a space sufficient for accommodating at least a helmet of the rider in the structure of the first aspect of the invention.

According to a straddle-type vehicle in a ninth aspect of the invention, the engine is formed integrally with a transmission case which transmits the driving force to the vehicle, and the engine is a unit swing type engine supported by the body frame such that the engine can swing substantially in the up-down direction in the structure of the first aspect of the invention.

According to the characteristics of the invention, the maneuverability of the straddle-type vehicle and the comfortableness around the knees of the rider riding on the vehicle can be further improved even in the structure having the article storage unit such as helmet storage unit and a fuel tank.

### BRIEF DESCRIPTION OF THE DRAWINGS

[Fig. 1] Fig. 1 is a left side view of a straddle-type vehicle according to an embodiment of the invention.
[Fig. 2] Fig. 2 is a cross-sectional view of the straddle-type vehicle taken along a line F1-F1 shown in Fig. 1.
[Fig. 3] Fig. 3 is a left side view of a straddle-type vehicle according to a modified example of the invention.

### BEST MODE FOR CARRYING OUT THE INVENTION

A straddle-type vehicle according to an embodiment of the invention is hereinafter described with reference to the drawings. In these figures, identical or similar reference numbers are given to identical or similar parts. It should be noted that the figures are only schematic ones where the proportions and the like for the respective sizes do not correspond to the actual ones.

It is therefore intended that specific sizes and the like are determined based on the teachings shown herein. Obviously, some parts shown in one figure have different size relations and proportions from those shown in other figures.

### (Structure of Straddle-type Vehicle)

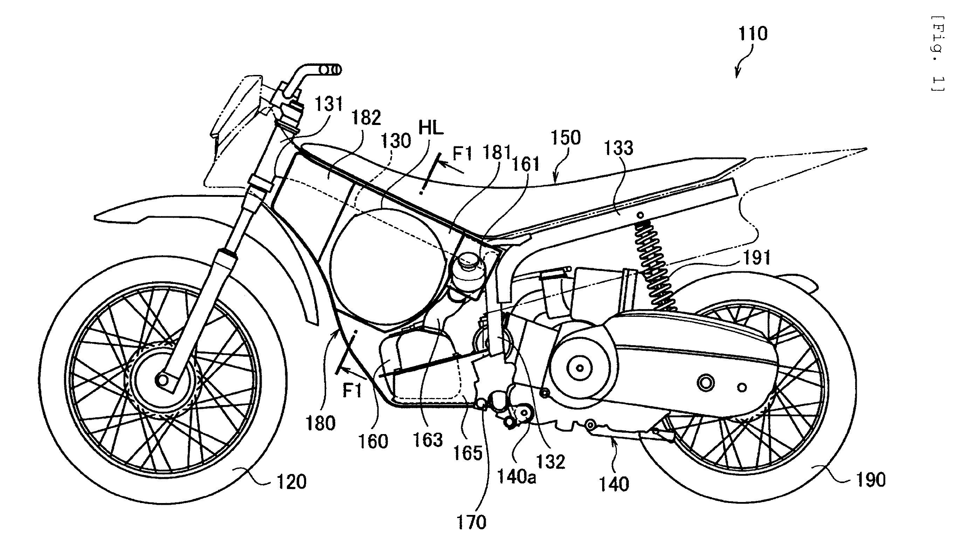

Fig. 1 is a left side view illustrating a motorcycle 110 as the straddle-type vehicle in this embodiment. According to the component layout of the motorcycle 110 as the characteristics of this motorcycle, a fuel tank 160 is disposed before an engine unit 140, at least a part of a helmet storage unit 181 is disposed above the fuel tank 160, and the helmet storage unit 181 is disposed before a step 170.

In the structure of the motorcycle 110, therefore, the fuel tank 160 is positioned below the helmet storage unit 181. The helmet storage unit 181 in this embodiment constitutes an article storage unit.

As illustrated in Fig. 1, the motorcycle 110 has a front wheel 120 and a rear wheel 190, and the rear wheel 190 is driven by driving force generated from the engine unit 140.

The engine unit 140 is a so-called unit-swing-type engine. Thus, the engine unit 140 and the fuel tank 160 are disposed in the lower region of the body of the motorcycle 110. The engine unit 140 has a pivot unit 140a, and is supported by the motorcycle 110, more specifically, by a vertical sub frame 132 such that the engine unit 140 can swing. The motorcycle 110 includes a body frame 130, a head pipe 131, a vertical sub frame 132, and a rear sub frame 133.

The body frame 130 constitutes a framework of the motorcycle 110. The body frame 130 extends toward the rear from the head pipe 133 which supports a steering shaft (not shown) such that the steering shaft can rotate. The body frame 130 is disposed above the helmet storage unit 181.

The vertical sub frame 132 is joined to the body frame 130. More specifically, the vertical sub frame 132 is connected to the rear end of the body frame 130. The vertical sub frame 132 extends approximately in the up-down direction of the motorcycle 110.

The step 170 on which the foot of the rider is placed is provided on the vertical sub frame 132. In this embodiment, the step 170 constitutes a foot rest.

The rear sub frame 133 is joined to the body frame 130 and the vertical sub frame 132. The rear sub frame 133 is disposed below a seat 150 to support the seat 150. A rear shock absorber unit 191 is attached to the rear sub frame 133. More specifically, the upper end of the rear shock absorber unit 191 is attached to the rear sub frame 133. The lower end of the rear shock absorber 191 is attached to the engine unit 140.

The motorcycle 110 has the seat on which riders (rider and tandem-rider) sit. The seat 150 extends in the front-rear direction of the motorcycle 110. The riders sitting on the seat 150 take a posture of straddling on a saddle.

The fuel tank 160 is disposed before the engine unit 140. The fuel tank 160 is disposed before the vertical sub frame 132. The fuel tank 160 has an oil supply port unit 161. The oil supply port unit 161 has an oil supply port (not shown) through which fuel is supplied. The oil supply port unit 161 is disposed behind the helmet storage unit 181. The fuel tank 160 and the oil supply port unit 161 are connected by a fuel hose 163 for conveying fuel.

The fuel tank 160 is supported by a tank bracket 165. The tank bracket 165 supports the left side and right side of the fuel tank 160. The tank bracket 165 is attached to the vertical sub frame 132.

The fuel tank 160 is covered by a body cowl 180. The body cowl 180 has the helmet storage unit 181 and an electric equipment storage unit 182.

At least a part of the helmet storage unit 181 is disposed above the fuel tank 160. The helmet storage unit 181 is positioned before the step 170.

The helmet storage unit 181 accommodates an open face type (jet type) helmet HL. The electric equipment storage unit 182 accommodates electric equipment such as rectifier regulator.

### (Cross-sectional Shape of Helmet Storage Unit)

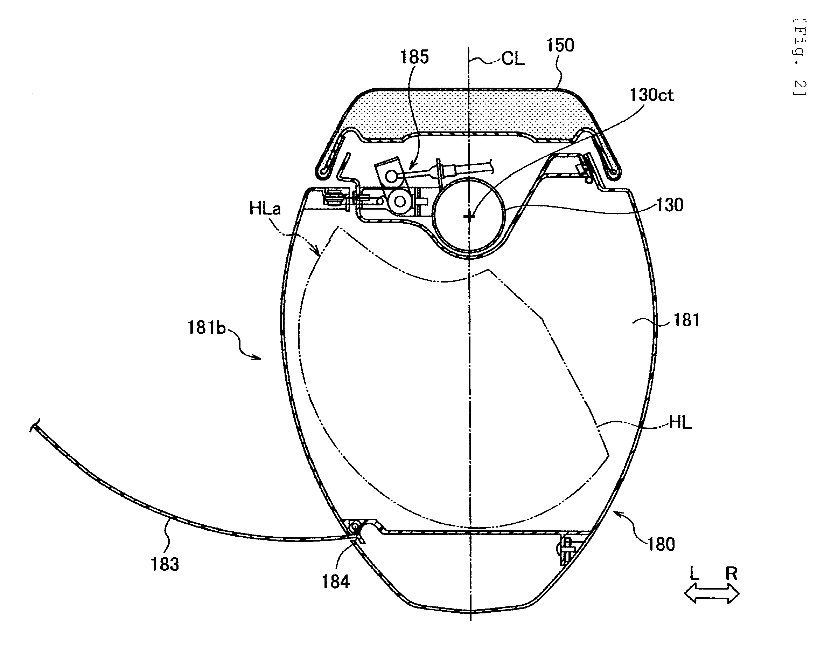

Fig. 2 is a cross-sectional view of the motorcycle 110 taken along a line F1-F1 in Fig. 1. As illustrated in Fig. 2, the body frame 130 is positioned above the helmet storage unit 181. The body frame 130 is located approximately at the center in the vehicle width direction (L-R direction in the figure). More specifically, a center 130ct of the body frame 130 is positioned on a center line CL. This center line CL corresponds to a straight line passing the center of the motorcycle 110 in the vehicle width direction.

The height of the helmet storage unit 181 on the center line CL is smaller than the heights of the helmet storage unit 181 in the regions shifted toward the outside in the vehicle width direction from the center line CL, more specifically, the heights on the right and left sides of the center light CL. Thus, the regions of the helmet storage unit 181 on the right and left sides of the center line CL extend toward the sides of the body frame 130 while surrounding the body frame 130.

An opening 181b through which the helmet HL is put into and taken out from the helmet storage unit 181 is formed on the left side surface of the helmet storage unit 181.

The opening 181b is closed by a cover 183. The cover 183 is provided on the left side surface of the helmet storage unit 181. The lower end of the cover 183 is rotatably supported by a hinge 184. The upper end of the cover 183 is attached by engagement of a lock mechanism 185.

The open face type (jet type) helmet HL is accommodated in the helmet storage unit 181. The helmet HL is contained in the helmet storage unit 181 such that a front portion HLa is positioned in the upper region of the helmet storage unit 181.

### (Operation and Advantage)

According to the motorcycle 110, the fuel tank 160 is disposed before the engine unit 140, and at least a part of the helmet storage unit 181 is disposed above the fuel tank 160. That is, the engine unit 140 and the fuel tank 160 are positioned in the lower part of the vehicle body of the motorcycle 110, and at least a part of the helmet storage unit 181 is positioned above the fuel tank 160. The helmet storage unit 181 is located before the step 170.

In this case, the engine unit 140 and the fuel tank 160 are positioned below the legs (particularly knees) of the riders sitting on the seat 150. Thus, the legs of the riders sitting on the seat 150 do not easily contact the fuel tank 160 and the helmet storage unit 181.

According to the motorcycle 110, therefore, the maneuverability of the motorcycle 110 and the comfortableness around the knees of the riders riding on the motorcycle 110 can be improved even in the structure having the helmet storage unit 181 and the fuel tank 160.

According to the motorcycle 110, the fuel tank 160 is disposed below the helmet storage unit 181. In this case, the fuel tank 160 which is particularly heavy when storing fuel is located at a low position of the motorcycle 110. Thus, steering stability of the motorcycle 110 can be increased.

According to this embodiment, the body frame 130 is disposed above the helmet storage unit 181. Thus, necessary rigidity of the body frame 130 for supporting the motorcycle 110 can be secured even in the structure including the helmet storage unit 181.

According to this embodiment, the tank bracket 165 for supporting the fuel tank 160 is attached to the vertical sub frame 132. Thus, the fuel tank 160 located below the helmet storage unit 181 can be securely supported by the vertical sub frame 132 even in the structure disposing the body frame 130 above the helmet storage unit 181.

According to this embodiment, the engine unit 140 is formed integrally with a transmission case for transmitting driving force to a rear wheel 190 as a unit swing type engine supported by the body frame 130 such that the engine unit 140 can swing substantially in the up-down direction.

In this case, a space for disposing the fuel tank 160 before the engine unit 140 is produced. Also, a space for disposing the helmet storage unit 181 above the fuel tank 160 is produced.

Thus, the engine unit 140 and the fuel tank 160 are disposed below the legs (particularly knees) of the riders sitting on the seat 150. Accordingly, the legs of the riders sitting on the seat 150 do not easily contact the fuel tank 160 and the helmet storage unit 181.

According to the motorcycle 110, therefore, the maneuverability of the motorcycle 110 and the comfortableness around the knees of the riders riding on the motorcycle 110 can be improved even in the structure having the helmet storage unit 181 and the fuel tank 160.

### (Modified Example)

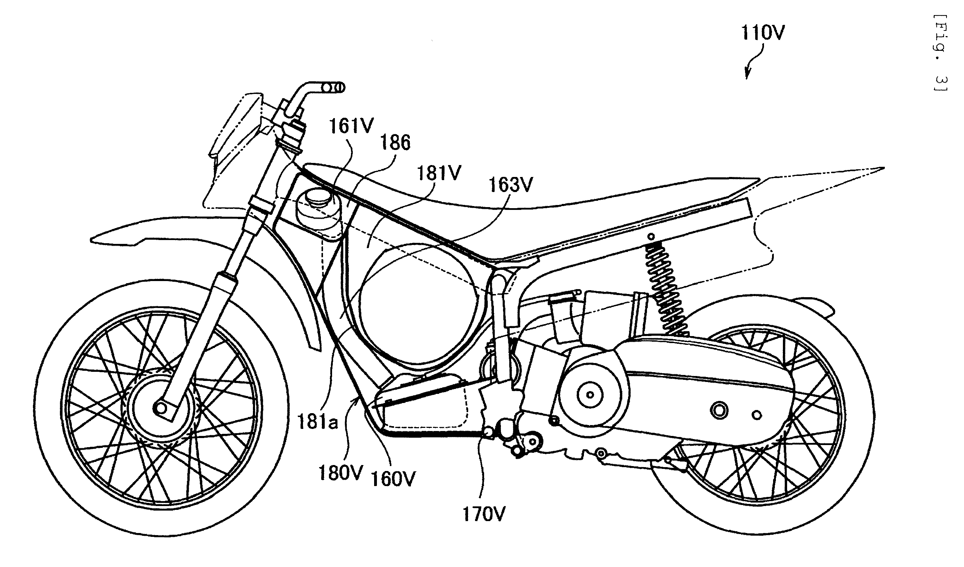

Fig. 3 is a left side view of a motorcycle 110V according to a modified example of the motorcycle 110 discussed above. Different structures in this example from those of the motorcycle 110 are now chiefly described.

According to the component layout of the motorcycle 110V as the characteristics of this motorcycle, a fuel tank 160V is disposed before an engine unit 140V, at least a part of a helmet storage unit 181V is positioned above the fuel tank 160V, and the helmet storage unit 181V is disposed before a step 170V.

Moreover, as illustrated in Fig. 3, the motorcycle 110V is further **characterized in that** an oil supply port unit 161V is disposed at a position different from the position of the oil supply port unit 161 of the motorcycle 110.

More specifically, the oil supply port unit 161V is disposed before the helmet storage unit 181V. The oil supply port unit 161V is contained in an oil supply port accommodating unit 186 provided on the front region of a body cowl 180V.

The fuel tank 160V and the oil supply port 161V are connected by a fuel hose 163V (fuel pipe unit) through which fuel is supplied. The fuel hose 163V is disposed along an outer side surface 181a of the helmet storage unit 181V.

According to the motorcycle 110V, the fuel hose 163V is disposed along the outer side surface 181a of the helmet storage unit 181V. Thus, the space occupied by the fuel tank 160V, the oil supply port unit 161, and the fuel hose 163 can be decreased even in the structure disposing the oil supply port unit 161V away from the fuel tank 160V, more specifically, disposing the oil supply port unit 161V before the helmet storage unit 181V.

Accordingly, the layout of the fuel tank 160V, the oil supply port unit 161V, and the fuel hose 163V contributes to increase in the capacity of the helmet storage unit 181V and enlargement of space occupied by other equipment.

### (Other Examples)

While the embodiment of the invention has been described as disclosure of the invention, it should not be understood that the invention is limited by the description and drawings constituting a part of the disclosure. Various modifications and changes will be obvious for those skilled in the art from the teachings of the disclosure.

While the motorcycle 110 (motorcycle 110V) in this embodiment includes the engine unit 140 supported by the vertical sub frame 132 such that the engine unit 140 can swing, the engine may be an engine 40 attached to a body frame 30.

According to the motorcycle 110 (motorcycle 110V) in this embodiment, the article storage unit is the helmet storage unit 181. However, the article storage unit may accommodate articles such as tools carried on the vehicle and baggage of the rider other than a helmet.

Obviously, various modifications and the like not shown in this description are included in the scope of the invention. Thus, the technical scope of the invention is defined only by the specific matters of the invention within the range appropriately claimed based on the above description.

The entire contents of Japanese Patent Application No. 2007-094983 (filed on March 30, 2007) are incorporated in this description by reference.

### INDUSTRIAL APPLICABILITY

As described above, the straddle-type vehicle according to the invention improves maneuverability and comfortableness around the knees of the rider even in the structure including the helmet storage unit and the fuel tank. Thus, the technology of the invention is appropriately used for the straddle-type vehicle which requires straddling posture of the rider.

## Claims

1. A straddle-type vehicle, comprising:
an engine which generates driving force to be transmitted to a wheel and is attached to a body frame;
a fuel tank which stores fuel to be supplied to the engine;
an article storage unit which accommodates an article; and
a foot rest on which a foot of a rider is placed,
wherein
the fuel tank is disposed before the engine,
at least a part of the article storage unit is disposed above the fuel tank, and
the article storage unit is disposed before the foot rest.

2. The straddle-type vehicle according to claim 1, wherein:
the fuel tank has an oil supply port unit through which the fuel is supplied; and
the oil supply port unit is disposed behind the article storage unit.

3. The straddle-type vehicle according to claim 1, wherein:
the fuel tank has an oil supply port unit through which the fuel is supplied; and
the oil supply port unit is disposed before the article storage unit.

4. The straddle-type vehicle according to claim 3, wherein:
the fuel tank has a fuel pipe unit connected to the oil supply port unit and the fuel tank; and
the fuel pipe unit is disposed along an outer side surface of the article storage unit.

5. The straddle-type vehicle according to claim 1, further comprising:
a body frame which constitutes a framework of the straddle-type vehicle,
wherein the body frame is disposed above the article storage unit.

6. The straddle-type vehicle according to claim 5, further comprising:
a vertical sub frame connected with the body frame and extending substantially in the up-down direction of the straddle-type vehicle; and
a tank bracket which supports the fuel tank,
wherein
the tank bracket is attached to the vertical sub frame.

7. The straddle-type vehicle according to claim 6, wherein:
the article storage unit has an opening;
the article storage unit has a cover which closes the opening; and
the cover is disposed on the side surface of the article storage unit.

8. The straddle-type vehicle according to claim 1, wherein the article storage unit has a space sufficient for accommodating at least a helmet of the rider.

9. The straddle-type vehicle according to claim 1, wherein:
the engine is formed integrally with a transmission case which transmits the driving force to the vehicle; and
the engine is a unit swing type engine supported by the body frame such that the engine can swing substantially in the up-down direction.
